# EUROPÄISCHE PATENTANMELDUNG

(11) **EP 2 556 953 A1**
(43) Veröffentlichungstag der Anmeldung: **13.02.2013**
(21) Anmeldenummer: 11177255.4
(22) Anmeldetag: 11.08.2011
(51) Int. Cl.: B32B 5/18, B32B 27/36, B32B 7/12, B32B 27/10, B32B 29/00, C08J 9/00, C08J 9/12

(54) **Verfahren zur Herstellung eines Papier-Schaumstoffverbunds**

(71) Anmelder: BASF SE, 67056 Ludwigshafen (DE)
(72) Erfinder: Die Erfindernennung liegt noch nicht vor

(57) **Zusammenfassung**

Die Erfindung betrifft ein Verfahren zur Herstellung eines Papier/Schaumstoffverbunds ABC, wobei
a) ein Papier A mit einem Flächengewicht von 30 bis 600 g/m² vorgelegt wird;
b) eine dünne Klebstoffschicht B auf das Papier A oder eine Schaumlage C aufgebracht wird;
c) die 1 bis 200 mm dicke Schaumlage C aus einem biologisch abbaubaren Polyester auf die Papierseite zum Verbund ABC aufgepresst wird, dadurch gekennzeichnet, dass die Schaumlage C aufgebaut ist aus:
i) 50 bis 98,9 Gew.-%, bezogen auf das Gesamtgewicht der Komponenten i bis iii, Polymilchsäure,
ii) 1 bis 49,9 Gew.-%, bezogen auf das Gesamtgewicht der Komponenten i bis iii, mindestens eines Polyesters auf Basis von aliphatischen und/oder aromatischen Dicarbonsäuren und aliphatischen Dihydroxyverbindungen,
iii) 0,1 bis 2 Gew.-%, bezogen auf das Gesamtgewicht der Komponenten i bis iii, eines Epoxidgruppen-haltigen Copolymers auf Basis Styrol, Acrylsäureester und/oder Methacrylsäureester, und
iv) 0 bis 10 Gew.-%, bezogen auf das Gesamtgewicht der Komponenten i bis iv, eines oder mehrerer Additive.
Weiterhin betrifft die Erfindung ein Verfahren zur Herstellung eines Papier/Schaumstoffverbunds ABCBA und Papier/Schaumstoffverbunde ABC und ABCBA hergestellt nach diesen Verfahren sowie deren Verwendung für flexible Verpackungen.

## Beschreibung

Die Erfindung betrifft ein Verfahren zur Herstellung eines Papier/Schaumstoffverbunds ABC, wobei
a) ein Papier A mit einem Flächengewicht von 30 bis 600 g/m2 vorgelegt wird;
b) eine dünne Klebstoffschicht B auf das Papier A oder die Schaumlage C aufgebracht wird;
c) eine 1 bis 200 mm dicke Schaumlage C aus einem biologisch abbaubaren Polyester auf die Papierseite zum Verbund ABC aufgepresst wird, dadurch gekennzeichnet, dass die Schaumlage C aufgebaut ist aus:
   i) 50 bis 98,9 Gew.-%, bezogen auf das Gesamtgewicht der Komponenten i bis iii, Polymilchsäure,
   ii) 1 bis 49,9 Gew.-%, bezogen auf das Gesamtgewicht der Komponenten i bis iii, mindestens eines Polyesters auf Basis von aliphatischen und/oder aromatischen Dicarbonsäuren und aliphatischen Dihydroxyverbindung,
   iii) 0,1 bis 2 Gew.-%, bezogen auf das Gesamtgewicht der Komponenten i bis iii, eines Epoxidgruppen-haltigen Copolymers auf Basis Styrol, Acrylsäureester und/oder Methacrylsäureester, und
   iv) 0 bis 10 Gew.-%, bezogen auf das Gesamtgewicht der Komponenten i bis iv, eines oder mehrerer Additive.

Weiterhin betrifft die Erfindung ein Verfahren zur Herstellung eines Papier/Schaumstoffverbunds ABCBA und Papier/Schaumstoffverbunde ABC und ABCBA hergestellt nach diesen Verfahren sowie deren Verwendung für flexible Verpackungen.

Flexible Verpackungen mit einem Mehrschichtaufbau sind bereits literaturbekannt. Auch Schaumstoffverbunde, die als äußere Schicht eine Papierschicht aufweisen können, sind in EP 696612, EP 1127914, EP 1777065 und WO 95/02000 beschrieben. In all diesen Schriften wird eine Schaumlage C aus destrukturierter (thermoplasifizierter) Stärke oder aus Polyvinylalkohol eingesetzt. Die literaturbekannten Schaumstoffverbunde können jedoch hinsichtlich Ihrer Feuchteresistenz und Ihren mechanischen Eigenschaften sowie hinsichtlich ihres Gewichts nicht immer voll überzeugen.

Die Aufgabe bestand somit darin, leichte und feuchteresistente Schaumstoffverbunde zu finden.

Das eingangs erwähnte Verfahren eignet sich hervorragend zur Herstellung leichter und feuchteresistenter Schaumstoffverbunde, die zudem noch sehr gut biologisch abbaubar sind.

Die Erfindung wird im Folgenden näher beschrieben:

Als Substrat A werden "Papierprodukte" verwendet. Unter dem Begriff "Papierprodukte" fallen im Sinne der vorliegenden Erfindung alle Arten von Papier und insbesondere Pappe und Karton.

Als Faserstoffe zur Herstellung dieser Papierprodukte kommen sämtliche dafür gebräuchlichen Qualitäten in Betracht, z.B. Holzstoff, gebleichter und ungebleichter Zellstoff, Papierstoffe aus allen Einjahrespflanzen sowie Altpapier (auch als Ausschuss, sowohl gestrichen als auch ungestrichen). Diese Faserstoffe können entweder allein oder in beliebiger Mischung miteinander zu Herstellung der Pulpen, aus denen die Papierprodukte hergestellt werden, eingesetzt werden. Zu Holzstoff gehören beispielsweise Holzschliff, thermomechanischer Stoff (TM P), chemothermomechanischer Stoff (CTMP), Druckschliff, Halbzellstoff, Hochausbeute-Zellstoff und Refiner Mechanical Pulp (RMP). Als Zellstoff kommen beispielsweise Sulfat-, Sulfit- und Natronzellstoffe in Betracht. Geeignete Einjahrespflanzen zur Herstellung von Papierstoffen sind beispielsweise Reis, Weizen, Zuckerrohr und Kenaf.

Üblicherweise werden den Zellstoffen Leimungsmittel in einer Menge von 0,01 bis 3 Gew.-%, bevorzugt 0,05 bis 1 Gew.-%, jeweils fest, bezogen auf trockenen Papierstoff, zugesetzt und richten sich nach dem gewünschten Leimungsgrad der auszurüstenden Papiere. Des Weiteren kann der Papierwerkstoff weitere Stoffe enthalten, wie z. B. Stärke, Pigmente, Farbstoffe, optische Aufheller, Biozide, Verfestiger für Papier, Fixiermittel, Entschäumer, Retentionsmittel, und/oder Entwässerungsmittel.

Der Papierwerkstoff A weist eine Grammatur von 30 bis 600 g/m², vorzugsweise 40 bis 400 und insbesondere bevorzugt 50 bis 150 g/m² auf.

Der Papierwerkstoff A kann mit Metall, z. B. Aluminium, beschichtet (bedampfte) sein. Die genannten Papierwerkstoffe A können beispielsweise auch mit Druckfarben bedruckt sein. Für die Papierschichten A kommen die unterschiedlichsten Materialien in Frage, z. B. weißer oder brauner Kraftliner, Halbstoff, Altpapier, Wellenstoff oder Schrenz. Altpapier ist besonders bevorzugt; die für Altpapier oft typischen Mängel in der Festigkeit können durch die Schaumstofflage C ausgeglichen werden. Gleichzeitig ist der Verbund leicht und feuchteresistent.

Für die Klebstoffschicht B werden vorzugsweise biologisch abbaubare Klebstoffe verwendet. Biologisch abbaubare Klebstoffe auf Stärkebasis wurden untersucht, haben sich jedoch nicht als geeignet erwiesen. Hervorragend geeignet sind die von BASF SE unter dem Namen Epotal® Eco vertriebenen Klebstoffe, die in der PCT/EP2011/06216 näher beschrieben sind. Auf die Schrift PCT/EP2011/06216 sei im Hinblick auf die Herstellung und Zusammensetzung der Klebstoffe explizit verwiesen. Es handelt sich hierbei um eine Polyurethandispersion, wobei das Polyurethan zu mindestens 60 Gew.-% aufgebaut ist aus
(ba) Diisocyanaten,
(bb) Polyesterdiolen und
(bc) mindestens einer bifunktionellen Carbonsäure, ausgewählt aus Dihydroxycarbonsäuren und Diaminocarbonsäuren.

Neben den zuvor beschriebenen Polyurethandispersionen, sind insbesondere wässrige Polyesterdispersionen, wässrige Polycrylatdispersionen oder Polyamine geeignet. Geeignete Polyesterdispersionen sind beispielsweise die in der PCT/EP2011/054471 beschriebenen Dispersionen von aliphatisch/aromatischen Polyestern oder von aliphatischen Polyestern wie beispielsweise Polybutylenadibat oder Polybutylensebacat.

Geeignete Polyacrylatdiespersionen sind beispielsweise die in der EP 1169403, EP 952199 und in der Anmeldung EP 11162536.4 beschriebenen Haftkleber.

Geeignete Polyamine sind beispielsweise die von BASF SE vertriebenen Catiofast® Produkte.

Der Klebstoff B besteht im Wesentlichen aus mindestens einem in Wasser dispergierten Polyurethan als polymeres Bindemittel und optional Zusatzstoffen wie Füllstoffen, Verdicker, Entschäumer etc. Das polymere Bindemittel liegt vorzugsweise als Dispersion in Wasser oder auch in einem Gemisch aus Wasser und wasserlöslichen organischen Lösungsmitteln mit Siedepunkten von vorzugsweise unter 150°C (1 bar) vor. Besonders bevorzugt ist Wasser als einziges Lösungsmittel. Bei Gewichtsangaben zur Zusammensetzung des Klebstoffs wird das Wasser oder sonstige Lösemittel nicht mitberechnet.

Die Polyurethane bestehen vorzugsweise überwiegend aus Polyisocyanaten, insbesondere Diisocyanaten einerseits und als Reaktionspartner, Polyesterdiole sowie bifunktionellen Carbonsäuren andererseits. Vorzugsweise ist das Polyurethan zu mindestens 40 Gew.-%, besonders bevorzugt zu mindestens 60 Gew.-% und ganz besonders bevorzugt zu mindestens 80 Gew.-% aus Diisocyanaten, Polyesterdiolen und bifunktionellen Carbonsäuren aufgebaut.

Das Polyurethan kann amorph oder teilkristallin sein. Wenn das Polyurethan teilkristallin ist, so ist der Schmelzpunkt vorzugsweise kleiner 80 °C. Bevorzugt enthält das Polyurethan dazu Polyesterdiole in einer Menge von mehr als 10 Gew.-%, mehr als 50 Gew.-% oder mindestens 80 Gew.-%, bezogen auf das Polyurethan.

Insgesamt ist das Polyurethan vorzugsweise aufgebaut aus:
ba) Diisocyanaten,
bb) Diolen, von denen
b1) 10 bis 100 mol-%, bezogen auf die Gesamtmenge der Diole (b), Polyesterdiole sind und ein Molekulargewicht von 500 bis 5000 g/mol aufweisen,
b2) 0 bis 90 mol-%, bezogen auf die Gesamtmenge der Diole (b), ein Molekulargewicht von 60 bis 500 g/mol aufweisen,
bc) mindestens einer bifunktionellen Carbonsäure, ausgewählt aus Dihydroxycarbonsäuren und Diaminocarbonsäuren,
bd) optional weiteren, von den Monomeren (a) bis (c) verschiedenen mehrwertigen Verbindungen mit reaktiven Gruppen, bei denen es sich um alkoholische Hydroxylgruppen, primäre oder sekundäre Aminogruppen oder Isocyanatgruppen handelt und
be) optional von den Monomeren (a) bis (d) verschiedenen, einwertigen Verbindungen mit einer reaktiven Gruppe, bei der es sich um eine alkoholische Hydroxylgruppe, eine primäre oder sekundäre Aminogruppe oder eine Isocyanatgruppe handelt.

Auf dem Gebiet der Polyurethanchemie ist allgemein bekannt, wie das Molekulargewicht der Polyurethane durch Wahl der Anteile der miteinander reaktiven Monomere sowie des arithmetischen Mittels der Zahl der reaktiven funktionellen Gruppen pro Molekül eingestellt werden kann. Normalerweise werden die Komponenten (ba) bis (be) sowie ihre jeweiligen Molmengen so gewählt, dass das Verhältnis A : B mit
A der Molmenge an Isocyanatgruppen und
B der Summe aus der Molmenge der Hydroxylgruppen und der Molmenge der funktionellen Gruppen, die mit Isocyanaten in einer Additionsreaktion reagieren können,
0,5 : 1 bis 2 : 1, bevorzugt 0,8 : 1 bis 1,5, besonders bevorzugt 0,9 : 1 bis 1,2 : 1 beträgt. Ganz besonders bevorzugt liegt das Verhältnis A : B möglichst nahe an 1 : 1.

Die eingesetzten Monomere (ba) bis (be) tragen im Mittel üblicherweise 1,5 bis 2,5, bevorzugt 1,9 bis 2,1, besonders bevorzugt 2,0 Isocyanatgruppen bzw. funktionelle Gruppen, die mit Isocyanaten in einer Additionsreaktion reagieren können.

Bei dem erfindungsgemäßen Verfahren zur Herstellung des Verbunds wird die erfindungsgemäße Polymerdispersion oder eine entsprechend konfektionierte Zubereitung auf die zu verklebenden Substrate A bzw. Substrat C vorzugsweise mit einer Schichtdicke von 0,1 bis 40 g/m2, besonders bevorzugt 1 bis 10 g/m2 z. B. durch Rakeln, Streichen etc. aufgetragen. Es können übliche Beschichtungsverfahren angewendet werden, z.B. Walzenstreichen, Gegenlaufwalzenstreichen, Gravurwalzenstreichen, Gegenlaufgravurwalzenstreichen, Bürstenstreichen, Stabstreichen, Sprühbeschichten, Luftbürstenbeschichtung, Meniskusbeschichtung, Vorhangbeschichtung oder Tauchbeschichtung. Nach kurzer Zeit zur Ablüftung des Dispersionswassers (vorzugsweise nach 1 bis 60 Sekunden) kann Substrat A dann mit Schaumlage C zum Verbund ABC oder ABCBA kaschiert werden, wobei die Temperatur z.B. 20 bis 200 °C, vorzugsweise 20 bis 100 °C und der Druck z. B. 100 bis 3000 kN/m2, vorzugsweise 300 bis 2000 kN/m2 betragen kann.

In einer Ausführungsform wird die erfindungsgemäße Polymerdispersion als Einkomponentenmittel angewendet, d.h. ohne zusätzliche Vernetzungsmittel, insbesondere ohne Isocyanatvernetzer. Jedoch kann die erfindungsgemäße Polymerdispersion auch als zweikomponentiger Klebstoff verwendet werden, bei dem eine Vernetzungskomponente, wie z.B. ein wasseremulgierbares Isocyanat, zugesetzt wird. Wenigstens eines der Substrate kann auf der mit dem Klebstoff beschichteten Seite bedruckt oder metallisiert sein. Wenigstens eines der Substrate, vorzugsweise beide Substrate, sind biologisch abbaubar.

Es kann von Vorteil sein, den Kleber B durch Extrusionsbeschichtung - wie in der PCT/EP 2011 /062016 erwähnt - auf das Papier A aufzubringen. Die zuvor erwähnte wässrige Kaschierklebstoffzubereitung (Polymerdispersion) B wird als Zwischenschicht aufgebracht. Der Vorteil in der Verwendung der Kaschierklebstoffzubereitung bei der Extrusionsbeschichtung liegt darin begründet, dass die Extrusionstemperatur gesenkt werden kann. Die schonende Fahrweise spart Energie und beugt einer eventuellen Zersetzung der biologisch abbaubaren Schaumlage C vor.

Der Schaumlage C liegt ein Polymilchsäure-haltiges Polymer, das wie folgt aufgebaut ist, zugrunde:
i) 50 bis 98,9 Gew.-%, bevorzugt 55 bis 98,9 Gew.-%, insbesondere bevorzugt 60 bis 94,9 Gew.-% bezogen auf das Gesamtgewicht der Komponenten i bis iii, Polymilchsäure,
ii) 1 bis 49,9 Gew.-%, bevorzugt bis 1 bis 44,9 Gew.-%, insbesondere bevorzugt 5 bis 39,9 Gew.-% bezogen auf das Gesamtgewicht der Komponenten i bis iii, mindestens eines Polyesters auf Basis von aliphatischen und/oder aromatischen Dicarbonsäuren und aliphatischen Dihydroxyverbindung,
iii) 0,1 bis 2 Gew.-%, bevorzugt 0,1 bis 1 Gew.-% bezogen auf das Gesamtgewicht der Komponenten i bis iii, eines Epoxidgruppen-haltigen Copolymers auf Basis Styrol, Acrylsäureester und/oder Methacrylsäureester, und
iv) 0 bis 10 Gew.-%, bevorzugt 0.1 bis 2 Gew.-% bezogen auf das Gesamtgewicht der Komponenten i bis iv, eines oder mehrerer Additive vorzugweise mindestens eines Nukleierungsmittels.

Als Komponente i) wird Polymilchsäure mit dem folgenden Eigenschaftsprofil bevorzugt eingesetzt:
einer Schmelzvolumenrate (MVR bei 190° C und 2.16 kg nach ISO 1133 von 0.5 bis 15 bevorzugt 1 bis 9, besonders bevorzugt 2 bis 8 ml/10 Minuten);
einem Schmelzpunkt unter 180° C;
einem Glaspunkt (Tg) größer 40°C;
einem Wassergehalt von kleiner 1000 ppm;
einem Monomeren-Restgehalt (Lactid) von kleiner 0.3%;
einem Molekulargewicht von größer 50 000 Dalton.

Bevorzugte Polymilchsäuren sind beispielsweise von NatureWorks® das Ingeo® 2002 D, 4032 D, 4042 D und 4043 D, 8251 D, 3251 D und insbesondere 8051 D sowie 8052D. NatureWorks 8051 D und 8052 D sind Polymilchsäuren der Fa. NatureWorks, mit den folgenden Produkteigenschaften: Tg: 65,3°C, Tm: 153,9°C, MVR: 6,9 [ml/10 Minuten], Mw:186000, Mn:107000. Weiterhin weisen diese Produkte eine etwas höhere Säurezahl auf.

Für die Herstellung der Schaumlage C haben sich insbesondere Polymilchsäuren mit einer MVR nach ISO 1133 [190°C/2,16 kg] von 5 bis 8 ml/10 Minuten als vorteilhaft erweisen.

Insbesondere geeignet sind Polymilchsäuren, die den o.g. MVR-Bereich aufweisen und/oder eine Onset-Temperatur bei der Kaltkristallisation im Bereich von 80°C bis 125°C, bevorzugt bei 90°C bis 115°C und insbesondere bevorzugt bei 95°C bis 105°C, gemessen mittels DSC (differential scanning calorimetry) bei einer Heizrate von 20K/min, aufweisen (Meßbereich -60°C bis 220°C; Mettler DSC 30 mit einem TC15/TA controller, Mettler-Toledo AG).

Als Komponente ii sind aliphatische oder teilaromatische (aliphatisch-aromatische) Polyester zu verstehen.

Als Komponente ii) sind wie erwähnt rein aliphatische Polyester geeignet. Unter aliphatischen Polyestern werden Polyester aus aliphatischen C₂-C₁₂-Alkandiolen und aliphatischen C₄-C₃₆-Alkandicarbonsäuren wie Polybutylensuccinat (PBS), Polybutylenadipat (PBA), Polybutylensuccinatadipat (PBSA), Polybutylensuccinatsebacat (PBSSe), Polybutylensebacatadipat (PBSeA), Polybutylensebacat (PBSe) oder entsprechende Polyesteramide verstanden. Die aliphatischen Polyester werden von den Firmen Showa Highpolymers unter dem Namen Bionolle und von Mitsubishi unter dem Namen GSPla vermarktet. Neuere Entwicklungen sind in der WO 2010/034711 beschrieben.

Die aliphatischen Polyester weisen in der Regel Viskositätszahlen nach DIN 53728 von 150 bis 320 cm³/g und vorzugsweise 150 bis 250 cm³/g auf.

Der MVR (Schmelzvolumenrate) nach EN ISO 1133 (190°C, 2,16 kg Gewicht) liegt im Allgemeinen bei 0,1 bis 70, bevorzugt bei 0,8 bis 70 und insbesondere bei 1 bis 60 cm³/10 min.

Die Säurezahlen nach DIN EN 12634 liegen im Allgemeinen bei 0,01 bis 1,2 mg KOH/g, vorzugsweise bei 0,01 bis 1,0 mg KOH/g und insbesondere bevorzugt bei 0,01 bis 0,7 mg KOH/g.

Teilaromatische Polyester, die ebenfalls als Komponenet ii) geeignet sind, bestehen aus aliphatischen Diolen und aliphatischen sowie aromatischen Dicarbonsäuren. Zu den geeigneten teilaromatischen Polyestern gehören lineare nicht kettenverlängerte Polyester (WO 92/09654). Insbesondere sind aliphatisch/aromatische Polyester aus Butandiol, Terephthalsäure und aliphatischen C4-C18-Dicarbonsäuren wie Bernsteinsäure, Glutarsäure, Adipinsäure, Korksäure, Azelainsäure, Sebazinsäure und Brassylsäure (beispielsweise wie in WO 2006/097353 bis 56 beschrieben) geeignete Mischungspartner. Bevorzugt werden kettenverlängerte und/oder verzweigte teilaromatische Polyester als Komponente ii eingesetzt. Letztere sind aus den eingangs genannten Schriften WO 96/15173 bis 15176, 21689 bis 21692, 25446, 25448 oder der WO 98/12242, bekannt, auf die ausdrücklich Bezug genommen wird. Mischungen unterschiedlicher teilaromatischer Polyester kommen ebenso in Betracht.

Für das erfindungsgemäße Verfahren zur Herstellung von Schaumlagen sind insbesondere biologisch abbaubare, aliphatisch-aromatischer Polyester ii geeignet, die enthalten:
a) 40 bis 70 mol %, bevorzugt 50 bis 65 mol % bezogen auf die Komponenten a bis b, eines oder mehrerer Dicarbonsäurederivate oder Dicarbonsäuren ausgewählt aus der Gruppe bestehend aus: Bernsteinsäure, Adipinsäure, Sebazinsäure, Azelainsäure und Brassylsäure;
b) 60 bis 30 mol %, bevorzugt 50 bis 35 mol % bezogen auf die Komponenten a bis b, eines Terephthalsäurederivats;
c) 98 bis 102 mol %, bezogen auf die Komponenten a bis b, eines C₂-C₈-Alkylendiols oder C₂-C₆-Oxyalkylendiols;
d) 0,00 bis 2 Gew.-%, vorzugsweise 0, 01 bis 2 Gew.-% bezogen auf das Gesamtgewicht der Komponenten a bis c, eines Kettenverlängerers und /oder Vernetzers ausgewählt aus der Gruppe bestehend aus: einem di oder polyfunktionellen Isocyanat, Isocyanurat, Oxazolin , Epoxid, Peroxid, Carbonsäureanhydrid und /oder einem mindestens trifunktionellen Alkohol oder einer mindestens trifunktionellen Carbonsäure.

Die Polyester ii weisen in der Regel ein zahlenmittleres Molekulargewicht (Mn) im Bereich von 5000 bis 100000, insbesondere im Bereich von 10000 bis 75000 g/mol, bevorzugt im Bereich von 15000 bis 38000 g/mol, ein gewichtmittleres Molekulargewicht (Mw) von 30000 bis 300000, vorzugsweise 60000 bis 200000 g/mol und ein Mw/Mn-Verhältnis von 1 bis 6, vorzugsweise 2 bis 4 auf. Die Viskositätszahl liegt zwischen 50 und 450, vorzugsweise von 80 bis 250 g/mL (gemessen in o-Dichlorbenzol/Phenol (Gewichtsverhältnis 50/50). Der Schmelzpunkt liegt im Bereich von 85 bis 150, bevorzugt im Bereich von 95 bis 140°C.

Unter Komponente iii wird insbesondere Epoxidgruppen-haltiges Copolymer auf Basis Styrol, Acrylsäureester und/oder Methacrylsäureester verstanden. Die Epoxidgruppen tragenden Einheiten sind vorzugsweise Glycidyl(meth)acrylate. Als vorteilhaft haben sich Copolymere mit einem Glycidylmethacrylat-Anteil von größer 20, besonders bevorzugt von größer 30 und insbesondere bevorzugt von größer 50 Gew.-% des Copolymers erwiesen. Das EpoxidÄquivalentgewicht (EEW) in diesen Polymeren beträgt vorzugsweise 150 bis 3000 und insbesondere bevorzugt 200 bis 500 g/Äquivalent. Das mittlere Molekulargewicht (Gewichtsmittel) MW der Polymere beträgt vorzugsweise 2000 bis 25.000, insbesondere 3000 bis 8.000. Das mittlere Molekulargewicht (Zahlenmittel) Mn der Polymere beträgt vorzugsweise 400 bis 6.000, insbesondere 1000 bis 4.000. Die Polydispersität (Q) liegt im Allgemeinen zwischen 1.5 und 5. Epoxidgruppen-haltige Copolymere des obengenannten Typs werden beispielsweise von der BASF Resins B.V. unter der Marke Joncryl® ADR vertrieben. Als Kettenverlängerer besonders geeignet ist Joncryl® ADR 4368.

Unter Komponente iv wird insbesondere eines oder mehrere der folgenden Additive verstanden: Stabilisator, Nukleierungsmittel, Gleit- und Trennmittel, Tensid, Wachs, Antistatikum, Antifog-Mittel, Farbstoff, Pigment, UV-Absorber, UV-Stabilisator oder sonstigen Kunststoffadditiv. Insbesondere bevorzugt ist wie bereits erwähnt der Einsatz von 0,5 bis 1 Gew.-% bezogen auf die Komponenten i und ii eines Nukleierungsmittels.

Unter Nukleierungsmittel wird insbesondere Talkum, Kreide, Ruß, Graphit, Calcium- oder Zinkstearat, Poly-D-Milchsäure, N,N-Ethylen-bis-12-hydroxystearamid oder Polyglykolsäure verstanden: Besonders bevorzugt ist Talkum als Nukleierungsmittel.

Die Herstellung 1. der Polymilchsäurehaltigen Mischungen und 2. der Schaumlagen C erfolgt 1. beispielsweise aus den einzelnen Komponenten oder über geeignete Verzweigerbatche nach bekannten Verfahren (EP 792309 und WO 2006/07815).

Zur 2. Herstellung der Schaumlagen C werden die Komponenten in einem Ein- oder Doppelschneckenextruder bei 160 bis 220°C analog der WO2008/098888 vermischt. Bei diesen Temperaturen wird ein homogener Blend erhalten.

Hierdurch werden Zellwände mit Durchmessern kleiner 200 nm erreicht, in denen immer noch die diskontinuierliche Phase in der Matrix dispergiert sein kann. Hierdurch wird ein Aufreißen der Zellen während des Expansionsvorgangs vermieden. Dies wiederum führt zu hohen Anteilen an geschlossenen Zellen größer 70 %, insbesondere größer 80 % und besonders bevorzugt größer 90 %. Die niedrigen Zellwanddicken kleiner 200 nm führen außerdem zu Dichten kleiner 50 g/l und vorzugsweise kleiner 30 g/l.

In die Schmelze wird 1-25 Gew.-%, bevorzugt 1-15 Gew.-% Treibmittel eingetragen. Es werden physikalische oder chemische Treibmittel eingesetzt um eine niedrige Schaumdichte zu gewährleisten. Beispiele geeigneter Treibmittel sind lineare Alkane mit bevorzugt 4-6 Kohlenstoffatomen, Stickstoff, Kohlendioxid, Ethanol, Dimethylether, Diethylether, Methylethylether sowie Kombinationen hiervon. Besonders bevorzugt sind Butan, Pentan, Stickstoff, und Kohlendioxid, insbesondere Kohlendioxid. Die Schmelze wird anschließend in einem zweiten Doppelschneckenextruder abgekühlt. Alternativ hierzu kann die Abkühlung in einem hinteren Segment des Einschneckenaufschmelzextruders durchgeführt werden. Bei den gewählten Temperaturen ist darauf zu achten, dass der Druck im Extruder ausreichend hoch ist um ein potenzielles frühzeitiges Aufschäumen im Extruder zu unterbinden. Wird eine Lochdüse verwendet erhält man Schaumstränge, die eine glatte, glänzende Oberfläche besitzen.

Die extrudierten Schaumlagen können in einer Thermoformapparatur durch kurzzeitiges und gleichmäßiges Erhitzen zum Beispiel mit einer Infrarot-Heizquelle auf 80-120°C, besonders bevorzugt 90-100°C erwärmt werden und per Vakuum, gegebenenfalls unter zusätzlicher Verwendung von Druckluft in einem Werkzeug zu einer definierten Form einer Schaumschale thermogeformt und anschließend zum Beispiel mit Luft abgekühlt werden.

Im Sinne der vorliegenden Erfindung ist das Merkmal "biologisch abbaubar" für einen Stoff oder den erfindungsgemäßen Verbund dann erfüllt, wenn dieser Stoff oder das Stoffgemisch entsprechend DIN EN 13432 einen prozentualen Grad des biologischen Abbaus von mindestens 90% aufweist.

Im Allgemeinen führt die biologische Abbaubarkeit dazu, dass die Polyester(mischungen) in einer angemessenen und nachweisbaren Zeitspanne zerfallen. Der Abbau kann enzymatisch, hydrolytisch, oxidativ und/oder durch Einwirkung elektromagnetischer Strahlung, beispielsweise UV-Strahlung, erfolgen und meist zum überwiegenden Teil durch die Einwirkung von Mikroorganismen wie Bakterien, Hefen, Pilzen und Algen bewirkt werden. Die biologische Abbaubarkeit lässt sich beispielsweise dadurch quantifizieren, dass Polyester mit Kompost gemischt und für eine bestimmte Zeit gelagert werden. Beispielsweise wird gemäß DIN EN 13432 CO₂-freie Luft durch gereiften Kompost während des Kompostierens strömen gelassen und dieser einem definierten Temperaturprogramm unterworfen. Hierbei wird die biologische Abbaubarkeit über das Verhältnis der Netto-CO₂-Freisetzung der Probe (nach Abzug der CO₂-Freisetzung durch den Kompost ohne Probe) zur maximalen CO₂-Freisetzung der Probe (berechnet aus dem Kohlenstoffgehalt der Probe) als prozentualer Grad des biologischen Abbaus definiert. Biologisch abbaubare Polyester(mischungen) zeigen in der Regel schon nach wenigen Tagen der Kompostierung deutliche Abbauerscheinungen wie Pilzbewuchs, Riss- und Lochbildung.

Andere Methoden zur Bestimmung der Bioabbaubarkeit werden beispielsweise in ASTM D 5338 und ASTM D 6400-4 beschrieben.

Der erfindungsgemäße Verbund läßt sich wie folgt herstellen.

Einseitige Beschichtung (Verbund ABC):

Vor einem Papiersubstrat A bzw. einer Schaumplatte oder Schaumlage C wird eine kleine Menge Klebstoff, als schmaler Streifen aufgegossen und das Rakel mit beiden Händen unter leichtem Anpressdruck mit gleichmäßiger Geschwindigkeit bis über den unteren Rand des Papiers bzw. der Schaumplatte hinaus gezogen. Die Schaumplatte bzw. der Papiersubstrat sollten dann sofort in das mit klebemittel versehene Papier bzw. die Schaumplatte eingelegt werden. Die beiden Komponenten werden umgehend in den Trockenschrank bei ca. 2min 90°C gelegt und mit einer Platte, die etwa der Größe der Schaumplatte entspricht beschwert.

### Beidseitige Beschichtung (Verbund ABCBA):

Bei dieser Variante wird der Versuch wie oben beschrieben durchgeführt. Bei der zweiten Seite wird das Papier bzw. die zweite Schaumseite auch wieder mit der Dispersion beschichtet und mit der Schaumplatte C bzw. mit dem Papiersubstrat A zum Verbund ABCBA verklebt.

In der Regel weist der Papier/Schaumstoffverbund eine Gesamtdicke von 1 bis 300 mm, vorzugsweise von 2 bis 50 mm auf.

Alternativ oder zusätzlich können optional auch noch Primer oder Zwischenschichten zwischen Foliensubstrat und Klebstoffbeschichtung verwendet werden. Außerdem können die Verbundfolien, weitere, zusätzliche funktionale Schichten aufweisen, z.B. Barriereschichten, Druckschichten, Farb- oder Lackschichten oder Schutzschichten. Die funktionalen Schichten können sich dabei außen, d.h. auf der mit Klebstoff beschichteten Seite abgewandten Seite des Foliensubstrats oder innen, zwischen Foliensubstrat und Klebstoffschicht befinden.

Im erfindungsgemäßen Verbund ist das Papier zum Teil vor Öl, Mineralöl, Fett und Feuchtigkeit geschützt, weil die Schaumlage C eine entsprechende Barrierefunktion ausübt. Umgekehrt werden bei der Verwendung der Verbunde für Lebensmittelverpackungen die Lebensmittel vor den im beispielsweise Altpapier enthaltenen Mineralölen und Mineralstoffen geschützt, da die Schaumlage C diese Barrierefunktion ausübt. Weiterhin ermöglicht der Verbund durch ihre Verschweißbarkeit mit sich selbst sowie Papier, Karton und Metall die Herstellung von beispielsweise Kaffeebechern, Getränkekartons oder Kartons für Gefriergut.

Insbesondere eignet sich der Verbund zur Herstellung von Papierbeuteln für trockene Lebensmittel wie z.B. Kaffee, Tee, Suppenpulver, Saucenpulver; für Flüssigkeiten wie z.B. Kosmetika, Reinigungsmittel, Getränke; von Tubenlaminaten; von Papiertragetaschen; von Papierlaminaten und -coextrudaten für Eiscreme, Süßwaren (z.B. Schoko- und Müsli-Riegel), von Papierklebeband; von Kartonbechern (Pappbechern), Yoghurtbechern; von Menueschalen; von gewickelten Kartonbehältern (Dosen, Fässer), von nassfesten Kartons für Umverpackungen (Weinflaschen Lebensmittel); von Obststeigen aus beschichtetem Karton; von Fast Food-Teller; von Clamp Shells; von Getränkekartons und Kartons für Flüssigkeiten wie Wasch- und Reinigungsmittel, Gefriergutkartons, Eisverpackungen (z. B. Eisbecher, Einwickler für konische Eiscreme-Waffeln); von Papieretiketten; von Blumen- und Pflanztöpfen.

Die erfindungsgemäß hergestellten Verbundfolien sind besonders geeignet für die Herstellung von flexiblen Verpackungen, insbesondere für Lebensmittelverpackungen.

Es ist ein Vorteil der Erfindung, dass die Polyurethanklebstoffdispersionen B unterschiedliche Substrate gut miteinander verkleben können, wobei eine hohe Festigkeit des verklebten Verbundes bewirkt wird. Zudem zeichnet sich der erfindungsgemäß hergestellte Verbund durch eine gute biologische Abbaubarkeit aus.

### Beispiele

### Beispiel 1 Papier/Schaumstoffverbund ABC

### Papier (A)

### Altpapier-Bögen von 115 cm Breite und 170 cm Länge und einer Grammatur von 140 g/m² der Fa. Hamburger W. GmbH

### Klebstoff (B)

### 10 g/m² Epotal® P100 Eco der Fa. BASF SE

### Schaumlage (C)

Aus einer biologisch abbaubaren Polyestermischung enthaltend 90 Gew.-% Polymilchsäure 4043 D der Fa. NatureWorks, 9,4 Gew-% Ecoflex® C1200 (Polybutyleneadipatco-terephthalat der BASF SE) und 0,6 Gew.-% Joncryl® ADR 4368 CS der Fa. BASF Resins B.V. wurden durch Extrusion und Verwendung einer ringförmigen Düse jeweils Schaumlagen mit einer Dicke von 3.5 bis 4 mm hergestellt. Die Schaumlage wurde in Platten von 115 cm Breite und 170 cm Länge geschnitten.

### Herstellung des Verbunds

Ein Drahtrakelstab wurde ca. 8 cm unterhalb des oberen Randes auf das Papier A gelegt. Die für die Beschichtung von 10 g/m² nötige Menge des Klebstoffs B wurde auf die freie Fläche gegossen und mit der Rakel unter leichtem Anpressdruck mit gleichmäßiger Geschwindigkeit über das Papier verteilt. Anschließend wurde die Schaumlage C in das mit B beschichtete Papier eingelegt. Schließlich wurde die Schaumlage mit einer 1500 g schweren Platte beschwert und für ca. 2 Minuten bei 90°C im Trockenschrank nachbehandelt.

Der Verbund ABC hatte eine Schichtdicke von 4,0 mm und eine Dichte von 0,106 g/cm³.

### Beispiel 2 Papier/Schaumstoffverbund ABCBA

Ein Drahtrakelstab wurde ca. 8 cm unterhalb des oberen Randes auf das Papier A gelegt. Die für die Beschichtung von 10 g/m² nötige Menge des Klebstoffs B wurde auf die freie Fläche gegossen und mit der Rakel unter leichtem Anpressdruck mit gleichmäßiger Geschwindigkeit über das Papier verteilt. Anschließend wurde der einseitig beschichtete Verbund ABC (Beispiel 1) mit der unbeschichteten Seite in das mit B beschichtete Papier eingelegt. Schließlich wurde die Schaumlage mit einer 1500 g Platte beschwert und für ca. 2 Minuten bei 90°C im Trockenschrank nachbehandelt.

Der Verbund ABCBA hatte eine Schichtdicke von 4,17 mm und eine Dichte von 0,135 g/cm³

### Vergleichsbeispiel 3

Wellpappe1.3C der Fa. Hans Kolb Wellpappe GmbH & Co. KG.

Die Wellpappe hatte eine Schichtdicke von 4,00 mm und eine Dichte von 0,126 g/cm³.

Die Ergebnisse sind in der folgenden Tabelle 1 zusammengefasst.

**Tabelle 1**

| Beispiel | Durchstoßarbeit^{a} [J] | Durchstoßkrafta Fₘₐₓ [N] |
|---|---|---|
| 2 | 0,47 | 190 |
| V-3 | 0,4 | 170 |

| | | |
|---|---|---|
| ^{a} nach DIN 53373 (die Proben wurden 48 Stunden bei 40°C und einer relativen Luftfeuchtigkeit von 95% vorbehandelt) | | |

## Patentansprüche

1. Verfahren zur Herstellung eines Papier/Schaumstoffverbunds ABC, wobei
a) ein Papier A mit einem Flächengewicht von 30 bis 600 g/m² vorgelegt wird;
b) eine dünne Klebstoffschicht B auf das Papier A oder auf die Schaumlage C aufgebracht wird und
c) eine 1 bis 200 mm dicke Schaumlage C auf die Papierseite zum Verbund ABC aufgepresst wird, **dadurch gekennzeichnet, dass** die Schaumlage C aufgebaut ist aus:
i) 50 bis 98,9 Gew.-%, bezogen auf das Gesamtgewicht der Komponenten i bis iii, Polymilchsäure,
ii) 1 bis 49,9 Gew.-%, bezogen auf das Gesamtgewicht der Komponenten i bis iii, mindestens eines Polyesters auf Basis von aliphatischen und/oder aromatischen Dicarbonsäuren und aliphatischen Dihydroxyverbindung,
iii) 0,1 bis 2 Gew.-%, bezogen auf das Gesamtgewicht der Komponenten i bis iii, eines Epoxidgruppen-haltigen Copolymers auf Basis Styrol, Acrylsäureester und/oder Methacrylsäureester, und
iv) 0 bis 10 Gew.-%, bezogen auf das Gesamtgewicht der Komponenten i bis iv, eines oder mehrerer Additive.

2. Verfahren nach dem vorhergehenden Anspruch, **dadurch gekennzeichnet, dass** als Papier A Altpapier verwendet wird.

3. Verfahren nach einem der vorhergehenden Ansprüche, **dadurch gekennzeichnet, dass** als Klebstoff B eine Polyurethan-, Polyester-, Acrylatdispersion oder ein Polyamin verwendet wird.

4. Verfahren nach einem der vorhergehenden Ansprüche, **dadurch gekennzeichnet, dass** ein biologisch abbaubarer Polyurethandispersionsklebstoff B verwendet wird.

5. Verfahren nach einem der vorhergehenden Ansprüche, **dadurch gekennzeichnet, dass** der biologisch abbaubare Polyurethandispersionsklebstoff B zu mindestens 60 Gew.-% aufgebaut ist aus:
(ba) mindestens einem Diisocyanat,
(bb) mindestens einem Polyesterdiol und
(bc) mindestens einer bifunktionellen Carbonsäure, ausgewählt aus Dihydroxycarbonsäuren und Diaminocarbonsäuren.

6. Verfahren nach einem der vorhergehenden Ansprüche zur Herstellung eines Papier/Schaumstoffverbunds ABCBA, **dadurch gekennzeichnet, dass**:
a) jeweils ein Papier A mit einem Flächengewicht von 10 bis 300 g/m² vorgelegt wird;
b) jeweils eine dünne Klebstoffschicht B auf das Papier oder auf die Schaumstofflage C aufgebracht wird und
c) eine 1 bis 200 mm dicke Schaumlage C zwischen die beiden Papierseiten gebracht wird und zu dem Verbund ABCBA verpresst wird.

7. Papier/Schaumstoffverbunds ABC oder ABCBA erhältlich gemäß einem der Verfahren 1 bis 6.

8. Verwendung des Papier/Schaumstoffverbunds gemäß Anspruch 7 zur Herstellung von flexiblen Verpackungen.

9. Verwendung des Papier/Schaumstoffverbunds gemäß Anspruch 7 zur Herstellung von Schalen für Nahrungsmittel.

10. Verwendung des Papier/Schaumstoffverbunds gemäß Anspruch 7 zur Herstellung von Bechern für Kaffee, Suppe und Getränke.
